# NOUVEAU FASCICULE DE BREVET EUROPEEN

(11) **EP 0 281 432 B2**
(45) Date de publication et mention de la décision concernant l'opposition: **13.08.1997**
(45) Mention de la délivrance du brevet: 01.12.1993
(21) Numéro de dépôt: 88400091.0
(22) Date de dépôt: 18.01.1988
(51) Int. Cl.: F16G 1/08

(54) **Courroie sans fin de transmission de puissance**
Treibriemen
Transmission belt

(30) Priorité: 28.01.1987 FR 8700982
(43) Date de publication de la demande: 07.09.1988
(73) Titulaire: HUTCHINSON, F-75008 Paris (FR)
(72) Inventeur: Georget, Pierre, F-37170 Chambray les Tours (FR)
(74) Mandataire: Ores, Irène

(56) Documents cités:
- EP-B- 0 339 249
- FR-A- 2 129 386
- FR-A- 2 238 576
- US-A- 2 255 884
- US-A- 2 792 319
- US-A- 3 260 126
- US-A- 3 634 572
- US-A- 3 776 054
- US-A- 3 900 680
- US-A- 4 019 399
- US-A- 4 022 070
- US-A- 4 330 287
- US-A- 4 464 148

## Description

L'invention a pour objet une courroie sans fin de transmission de puissance selon le préambule de la revendication telle que connue par exemple du US-A-3 566 706.

On connaît, dans de multiples réalisations, des courroies sans fin de transmission de puissance comportant une armature de câblés noyée dans une matrice de matériau caoutchoutique et qui sont propres à coopérer avec les poulies d'un arbre mené et d'un arbre menant, respectivement. Il existe ainsi, à côté des courroies trapézoïdales, crantées ou non crantées, des courroies striées, c'est-à-dire des courroies dont la section, par un plan diamétral, ait un profil à face interne conformée suivant des dents adjacentes, de section droite triangulaire ou trapézoïdale, une telle courroie étant prévue pour coopérer avec des poulies dont la jante est à profil conjugué, c'est-à-dire présente des gorges adjacentes à section droite triangulaire ou trapézoïdale. De telles courroies sont décrites, par exemple, dans US-A-4 464 148 où est également décrit un procédé de fabrication de courroies à matrice en un matériau élastomère du type caoutchoutique et une armature longitudinale de câblés disposée dans la matrice suivant un enroulement hélicoïdal dont les spires sont distantes les unes des autres.

Les courroies striées, qui trouvent application dans de très nombreux domaines, sont désignées dans la nomenclature par les lettres H, J, K, L ou M, lesquelles définissent le pas et/ou la forme des dents ainsi que l'épaisseur radiale des courroies dont celles du type H ou J, à pas de dents de 1,6 et 2,34 mm, et d'épaisseur d'environ 3 mm et 4 mm, respectivement, sont utilisées dans la technique de l'électro-ménager, notamment pour l'entraînement des tambours de machines à laver le linge ou de sèche-linge à partir du moteur électrique de ces machines. Dans de telles applications, les vitesses de rotation sont de l'ordre de 400 à 1200 t/m et la mise sous tension de la courroie, après montage de celle-ci sur la poulie de l'arbre moteur et sur la poulie de l'arbre mené, est généralement effectuée en déplaçant le moteur monté sur un patin pivotant et en l'immobilisant en position lorsque la tension requise est atteinte ou à l'aide d'un tendeur à ressort, lorsque les puissances à transmettre sont moins importantes que dans le cas précédent.

Quel que soit le mode opératoire auquel il est fait appel, la tension doit être réglée avec précision pour que la vitesse de rotation de l'organe mené soit très proche de la valeur théorique souhaitée, des variations relativement faibles par rapport à cette valeur théorique entraînant un fonctionnement non satis-faisant pour le lavage et/ou le séchage du linge, par exemple. Il en résulte qu'au coût des moyens de pivotement et de réglage de l'entraxe des arbres mené et menant, s'ajoute celui du réglage de la tension après montage de la courroie sur les poulies avec lesquelles elles coopèrent. En outre, ni le montage du moteur, -dont la position doit être ajustée-, ni celui de la courroie ne peut être effectué de façon automatique.

Pour s'affranchir de ces difficultés, on a alors cherché à fournir des courroies sans fin de transmission de puissance suffisamment extensibles pour permettre leur montage sur les poulies avec lesquelles elles coopèrent sans modification de l'entraxe de celles-ci, d'une part, et, d'autre part, suffisamment élastiques pour, après montage, assurer d'elles-mêmes la tension requise pour une bonne transmission de puissance. De telles courroies fabriquées par extrusion ou moulage d'une matière thermoplastique ou thermodurcissable, notamment à base de résine du type polyester, se sont toutefois révélées non satisfaisantes, principalement en raison de la faible adhérence entre elles et les organes avec lesquels elles coopèrent.

On a également proposé, dans US-A-3 566 706, une courroie à base d'élastomère armée de câblés et qui peut être mise en place sur des poulies en l'allongeant, la courroie conservant cependant une tension minimale appropriée après mise en place pour assurer le fonctionnement satisfaisant de la transmission qu'elle équipe. Pour la réalisation d'une telle courroie, les câblés doivent être traités préalablement à leur mise en place de manière très spécifique et la fabrication en est compliquée d'autant.

Aussi, le problème se pose-t-il de fournir une telle courroie sans fin de transmission de puissance qui, tout en permettant son montage automatique sur des poulies avec lesquelles elle coopère, procure après mise en place un fonctionnement satisfaisant, en tout point comparable à celui des courroies mises sous tension selon les méthodes connues par augmentation de l'entraxe des poulies ou à l'aide d'un dispositif tendeur. Complémentairement à ce problème, se pose celui de fournir une telle courroie dont les bonnes caractéristiques de fonctionnement ne soient pas affectées par des variations de température, d'une part, et qui, d'autre part, soient bien appropriées pour équiper des systèmes de transmission utilisant des poulies à faible diamètre, comme maintenant proposé dans le domaine de l'électro-ménager, de l'automobile, ou des outils et outillages domestiques.

Ces problèmes sont résolus, selon l'invention, par une courroie sans fin de transmission de puissance comprenant une matrice en un matériau élastomère, avantageusement du type caoutchoutique, et une armature longitudinale de câblés disposés dans la matrice suivant un enroulement hélicoïdal à spires noyées dans la matrice, la courroie étant propre à être montée sur les poulies avec lesquelles elle coopère par allongement tout en conservant, après mise en place, une tension appropriée pour assurer le fonctionnement satisfaisant de la transmission qu'elle équipe, caractérisée en ce que lesdits câblés - qui sont stabilisés sous une tension très faible ou quasiment nulle lors de la fabrication de la courroie-, sont disposés suivant des spires distantes entre elles de 2 mm et en ce que l'armature est formée de câblés de (940 x 2) décitex en polyamide ayant un diamètre de 0,7 mm.

L'utilisation d'un matériau caoutchoutique du type de celui utilisé pour les courroies usuelles, par exemple à section trapézoïdale, crantées ou non crantées, permet d'obtenir une adhérence satisfaisante.

Dans une forme de réalisation préférée, la courroie est du type "striée", c'est-à-dire à profil de sa face interne à dents triangulaires ou trapézoïdales.

La courroie est fabriquée à une longueur inférieure à la longueur nominale de la transmission qu'elle est destinée à équiper. Elle subit ainsi lors du montage sur les poulies avec lesquelles elle coopère et dans les conditions normales de fonctionnement, un allongement compris entre 2 et 20 %, avantageusement de 2 à 15 % par rapport à sa longueur libre mesurée.

Une courroie selon l'invention, dont le module d'extension total est de l'ordre de 4 à 80 daN/mm pour 1 cm de largeur, et dont la tension en cours de fonctionnement est de l'ordre de 2 à 20 daN/cm de largeur peut aisément être mise en place sur les poulies avec lesquelles elle coopère. Il suffit, pour ce faire, de l'amener par traction à une longueur légèrement supérieure à la longueur nominale de la transmission qu'elle équipe, et des tractions de l'ordre de 40 à 200 daN/cm de largeur suivant la longueur de la courroie se sont révélées appropriées.

L'invention sera bien comprise par la description qui suit, faite à titre d'exemple et en référence au dessin annexé dans lequel :
- la figure 1 est une vue schématique d'une transmission de puissance à courroie sans fin selon l'invention ;
- la figure 2 est une vue en coupe selon la ligne 2-2 de la figure 1, mais à plus grande échelle et en perspective partielle ;
- la figure 3 est une vue en coupe selon la ligne 3-3 de la figure 1, schématique, et également à plus grande échelle ;
- la figure 4 est une vue partielle, schématique, d'une autre forme de réalisation d'une courroie selon l'invention ;
- la figure 5 est une vue très schématique d'un banc de mesure.

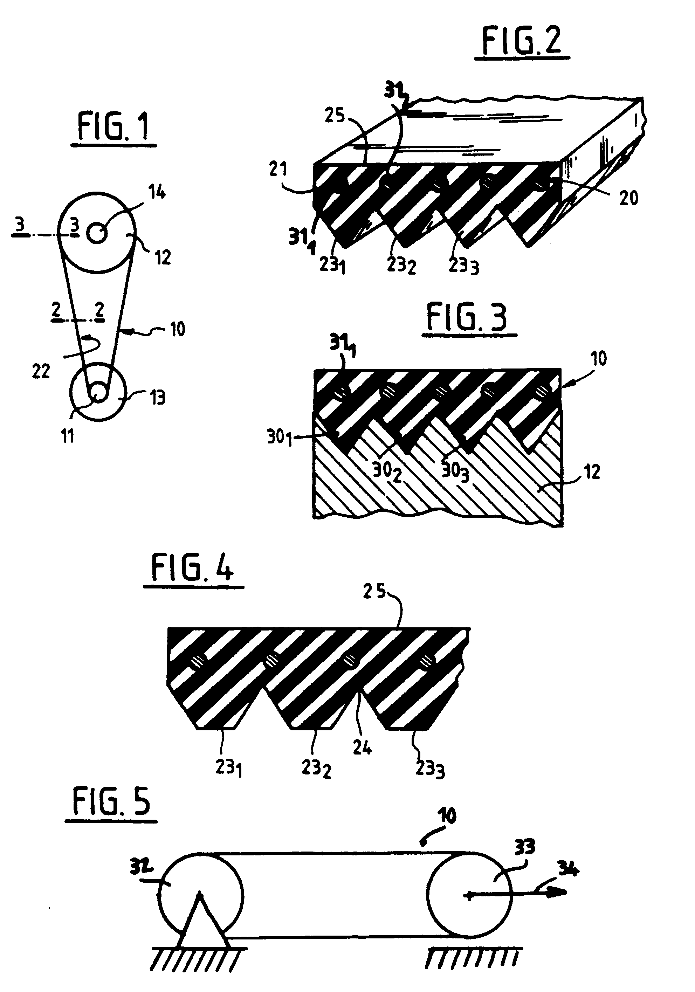

On se réfère d'abord aux figures 1 à 3 qui montrent une transmission de puissance dont la courroie sans fin, 10, coopère avec au moins deux poulies 11 et 12, solidaires, respectivement, de l'arbre menant d'un moteur 13 et d'un arbre mené 14 qui peut être celui du tambour d'une machine à laver le linge, d'un sèche-linge, d'un outil ou outillage à usage domestique, ou encore d'un équipement de véhicule automobile, sans que ces indications aient, bien entendu, quelque caractère limitatif que ce soit.

La courroie 10, sans fin, comporte une armature longitudinale de câblés 20 noyés dans une matrice d'élastomère 21 comme un mélange de caoutchouc polychloroprène ou de caoutchouc naturel ou de tout autre caoutchouc choisi dans les élastomères dièniques, comme le polybutadiène ou le SBR (caoutchouc de styrène butadiène) et d'un type usuel connu pour la fabrication de courroies sans fin de transmission de puissance, en raison des bonnes propriétés d'adhérence qu'il présente.

La courroie 10 est avantageusement du type "strié", c'est-à-dire conformée sur sa face interne 22 suivant des dents 23₁, 23₂, 23₃, etc... dont le pas est normalisé, de même que leur section droite, triangulaire, comme montré sur la figure 2, ou trapézoïdale, comme montré sur la figure 4, chaque référence H, J, K, L, M, de la norme DIN 7867 ou du projet de norme AFNOR R 15-506 définissant également l'épaisseur de la courroie mesurée entre le fond 24 des dents et la face externe 25 de la courroie. Comme montré sur la figure 3, cette dernière coopère avec des poulies 11 et 12 dont la jante a un profil conjugué de celui des dents 23, c'est-à-dire présente des gorges 30₁, 30₂, 30₃ de même disposition et de section droite semblable à celles des dents 23 qui y sont logées lors du fonctionnement du système de transmission.

Pour permettre, d'une part, le montage automatique de la courroie 10 sur les poulies 11 et 12, dont l'entraxe est fixe ou, en variante, est susceptible de varier d'une faible valeur (0 à 2%) en cours d'utilisation et pour fournir un fonctionnement satisfaisant de transmission après montage de la courroie, d'autre part, l'invention prévoit de faire application d'une armature longitudinale 20 dont le matériau constitutif, le positionnement et la stabilisation sont tels que le module d'extension total de la courroie a une valeur relativement faible, de l'ordre de 4 à 80 daN/mm pour 1 cm de largeur à 20°C, tout en ayant, après montage automatique, une tension minimale en cours de fonctionnement de l'ordre de 2 à 20 daN/cm de largeur.

Pour ce faire, l'invention prévoit de réaliser la courroie par un procédé semblable au procédé connu, suivant lequel on fabrique tout d'abord une ébauche sur un tambour cylindrique par mise en place successive d'une ou de nappes de gomme, puis de l'armature sous forme de câblés, par exemple en polyamide ou en polyester, ou en fibres acryliques ou encore en fibres aramide, en rayonne ou en coton, disposés sur le tambour suivant un enroulement hélicoïdal à spires non jointives, puis de nouveau une ou des couches de gomme, l'ébauche étant ensuite vulcanisée puis ultérieurement découpée à la largeur correspondant au nombre de dents voulu pour chaque courroie, ou encore, dans certaines réalisations, usinée au profil voulu.

Selon l'invention, outre le fait de disposer les câblés suivant un enroulement hélicoïdal à spires 31₁, 31₂, 31₃, etc... non jointives, on prévoit que lesdits câblés soient à faible module, d'une part, et que, d'autre part, ils soient stabilisés sous une tension très faible ou quasiment nulle, par les moyens usuels de stabilisation thermo-mécanique connus pour la fabrication de courroies à matrice caoutchoutique et âme textile.

On obtient ainsi des courroies dont le module d'extension total est de l'ordre de 4 à 80 daN/mm pour 1 cm de largeur à 20°C, c'est-à-dire des valeurs notablement inférieures à celles des courroies usuelles, striées ou trapézoïdales connues, dans lequel le module d'extension total est de l'ordre de 80 à 400 daN/mm pour 1 cm de largeur à la même température.

Cette faible valeur du module d'extension permet alors un montage automatique de la courroie sur les poulies 11 et 12, en exerçant sur ladite courroie une traction qui l'amène à une longueur légèrement supérieure à la longueur nominale de la transmission qu'elle forme avec les poulies.

De bons résultats ont été obtenus en exerçant une traction de l'ordre de 40 à 200 daN/cm de largeur suivant la longueur de la courroie.

Pour fournir à cette dernière au cours du fonctionnement une tension minimale assurant une transmission de puissance satisfaisante sous une extension donnée, avantageusement une tension comprise entre 2 et 20 daN/cm de largeur,l'invention prévoit d'associer à une transmission de longueur nominale donnée une courroie qui, avant montage, est de longueur inférieure à ladite longueur nominale. De façon plus précise, l'invention envisage de dimensionner la courroie de façon telle que, lors du montage sur les poulies avec lesquelles elle coopère et dans les conditions normales de fonctionnement, elle s'allonge d'une valeur comprise entre 2 et 20%, avantageusement de 7 à 15% par rapport à sa longueur mesurée sur banc d'essai du type de celui défini dans le projet de norme AFNOR R 15-506 ou dans la norme DIN 7867. Un tel banc d'essai est montré schématiquement sur la figure 5, avec des poulies 32 et 33 sur lesquelles est montée la courroie 10, et l'indication de l'application d'un effort, montrée schématiquement en 34, ledit effort étant déterminé pour chaque dent ou nervure sur les deux brins de la courroie.

Une courroie selon l'invention, ayant les caractéristiques définies ci-dessus, a sa tension qui demeure pratiquement inchangée lors des variations de température habituelles auxquelles elle est soumise, ce qui en accroît encore la facilité d'utilisation.

### EXEMPLE

Une courroie selon l'invention a été fabriquée en noyant dans une matrice de caoutchouc de polychloroprène une armature longitudinale formée par des câblés de (940 x 2) décitex en polyamide. Ces derniers, d'un diamètre de 0,7 mm ont été mis en place pour former l'armature longitudinale de la courroie suivant un enroulement hélicoïdal dont les spires étaient distantes entre elles de 2 mm.

Les câblés ont été stabilisés et une telle courroie présentait alors un module d'extension total de l'ordre de 7 daN/mm d'extension pour 1 cm de largeur à 20°C.

La longueur de la courroie, mesurée au banc d'essai selon la norme AFNOR N° R 15-506 ou DIN 7867 était de 1.110 mm.

Après montage sur une transmission d'une longueur nominale de 1.200 mm, en exerçant sur la courroie une traction de 75 daN/cm de largeur, on constate que la tension en cours de fonctionnement est de 10 daN/cm de largeur.

Aucune modification de cette tension n'est mesurable pour des variations de température comprises entre 5 et 35°C.

Une courroie selon l'invention est particulièrement bien appropriée pour équiper des montages dont l'entraxe est susceptible de varier (de 0 à 2%) en cours d'utilisation, alors que, pour de tels montages, les courroies usuelles connues sont totalement inappropriées en raison de leur incapacité à fournir un fonctionnement satisfaisant.

## Revendications

1. Courroie sans fin de transmission de puissance comprenant une matrice (21) en un matériau élastomère, avantageusement du type caoutchoutique et une armature longitudinale (20) de câblés en un matériau thermoplastique disposés suivant un enroulement hélicoïdal à spires (31₁, 31₂, 31₃, etc...) noyées dans la matrice, ladite courroie pouvant être montée par traction sur des poulies (11,12) avec lesquelles elle coopère tout en conservant, après mise en place, une tension minimale appropriée pour assurer le fonctionnement satisfaisant de la transmission qu'elle équipe, caractérisée en ce que lesdits câblés, -qui sont stabilisés sous une tension très faible ou quasiment nulle lors de la fabrication de la courroie-, sont disposés suivant des spires (31) distantes entre elles de 2 mm et en ce que l'armature (20) est formée de câblés de (940 x 2) décitex en polyamide ayant un diamètre de 0,7 mm.

## Patentansprüche

1. Endlosriemen zur Kraftübertragung, der eine Matrize (21) aus einem elastomeren, vorzugsweise kautschukartigen, Material und eine längsgerichtete Armierung (20) mit Kabeln aus einem thermoplastischen Material umfaßt, die, einer schraubenförmigen Wicklung in Windungen folgend (31₁, 31₂, 31₃, ...), in der Matrize versenkt angeordnet sind, wobei der Riemen durch Ziehen über Riemenscheiben (11, 12) montiert werden kann, mit denen er zusammenwirkt, und zwar so, daß nach dem Anordnen an seinem Platz eine geringe Spannung aufrechterhalten wird, die dazu geeignet ist, den ausreichenden Betrieb des Antriebs, den er ausrüstet, sicherzustellen, dadurch **gekennzeichnet,** daß die Kabel - die unter sehr schwacher oder praktisch keiner Spannung während der Herstellung des Riemens stabilisiert werden - Windungen folgend (31) angeordnet sind, deren Abstand voneinander 2 mm beträgt, und daß die Armierung (20) mit Kabeln von (940x2) Dezitex aus Polyamid mit einem Durchmesser von 0,7 mm gebildet ist.

## Claims

1. An endless power-transmission belt comprising a matrix (21) of elastomer material, advantageously of the rubber type, and longitudinal reinforcement (20) of cords of a thermoplastic material disposed in a helical winding of turns (31₁, 31₂, 31₃, etc ...) embedded in the matrix, said belt being capable of being mounted by traction on pulleys (11, 12) with which it co-operates while conserving, after being put into place, an appropriate minimum amount of tension for ensuring satisfactory operation of the transmission system to which it is fitted, characterized in that said cords, which are stabilized under very low or nearly zero tension during manufacture of the belt, are disposed in turns (31) spaced apart by 2 mm, and in that the reinforcement (20) is made up of (940 x 2) decitex cords of polyamide having a diameter of 0.7 mm.
